# EUROPEAN PATENT APPLICATION

(11) **EP 4 596 362 A1**
(43) Date of publication of application: **06.08.2025**
(21) Application number: 23907480.0
(22) Date of filing: 28.11.2023
(51) Int. Cl.: B61B 13/10, F16L 55/02, F16L 9/18

(54) **TUBE FOR TRANSPORTATION SYSTEM**

(30) Priority: 20.12.2022 KR 20220179035
(71) Applicant: POSCO Co., Ltd, Pohang-si, Gyeongsangbuk-do 37859 (KR)
(72) Inventor: CHO, Wooyeon, Incheon 22003 (KR); PARK, Youngman, Yongin-si, Gyeonggi-do 16828 (KR)
(74) Representative: Meissner Bolte Partnerschaft mbB
(86) International application number: PCT/KR2023/019371
(87) International publication number: WO 2024/136194

(57) **Abstract**

Disclosed herein is a tube for a transportation system. The tube for a transportation system according to an embodiment may include: an inner tube for providing a travel path of a vehicle that travels under a pressure lower than atmospheric pressure; an outer tube formed outside the inner tube; and a damping member for supporting the inner tube and the outer tube and buffering between the inner tube and the outer tube.

## Description

### [Technical Field]

The present disclosure relates to a tube for a transportation system to provide a travel path for a vehicle that moves under low pressure conditions.

### [Background Art]

Recently, a transportation system has been introduced that allows a vehicle to travel at high speed under low pressure conditions.

The transportation system includes a tube that provides a travel path for the vehicle. The tube may form an internal pressure lower than atmospheric pressure, so that air resistance is reduced during travel of the vehicle.

**In** addition, a magnetic levitation method may be applied to the transportation system to reduce frictional resistance, which is one of the driving resistances.

Inside the tube, attractive and repulsive forces of a magnetic field may be precisely and periodically changed, and thus a constant gap may be maintained between a guide rail and the vehicle, allowing the vehicle to maintain a magnetically levitated state during travel.

Controlling circumferential vibrations that occur during travel of the vehicle in the transportation system may be used to make the state of the transportation system more stable.

### [Disclosure]

### [Technical Problem]

An aspect of the present disclosure provides a tube for a transportation system that may provide a travel path for a vehicle and effectively reduce circumferential vibration that occurs during travel of the vehicle.

### [Technical Solution]

According to an aspect of the present disclosure, a tube for a transportation system may include: an inner tube for providing a travel path of a vehicle that travels under a pressure lower than atmospheric pressure; an outer tube formed outside the inner tube; and a damping member for supporting the inner tube and the outer tube and buffering between the inner tube and the outer tube.

The damping member may have a smaller elastic modulus than the inner tube and the outer tube.

The inner tube and the outer tube may be made of steel, and the damping member may have a smaller elastic modulus than the steel.

The elastic modulus of the damping member may be 1/100 to 1/1000 of an elastic modulus of the steel.

The damping member may have an annular shape in which an inner circumference of the damping member is supported by an outer circumference of the inner tube and an outer circumference of the damping member is supported by an inner circumference of the outer tube.

A width of the damping member in a longitudinal direction of the tube may be greater than half of a sum of a thickness of the inner tube and a thickness of the outer tube.

The width of the damping member in the longitudinal direction of the tube may be 2 to 5 times greater than half of the sum of the thickness of the inner tube and the thickness of the outer tube.

A plurality of damping members may be provided so as to be spaced apart from each other in a longitudinal direction of the tube.

The tube for the transportation system may further include a spacer disposed between the plurality of damping members to support the inner tube and the outer tube.

The spacer may have an annular shape in which an inner circumference of the spacer is supported by an outer circumference of the inner tube and an outer circumference of the spacer is supported by an inner circumference of the outer tube.

### [Advantageous Effects]

According to an aspect of the present disclosure, a tube for a transportation system may provide a travel path for a vehicle and effectively reduce circumferential vibration that occurs during travel of the vehicle.

### [Description of Drawings]

FIG. 1 is a side view illustrating a structure of a tube for a transportation system according to an embodiment of the present disclosure.
FIG. 2 is a cross-sectional view of a tube for a transportation system according to an embodiment of the present disclosure.
FIG. 3 illustrates a cross-sectional structure of FIG. 2 taken along line A-A, which is viewed from an arrow direction.
FIG. 4 illustrates a cross-sectional structure of FIG. 2 taken along line B-B, which is viewed from an arrow direction.
FIG. 5 illustrates a cross-sectional structure of FIG. 2 taken along line C-C, which is viewed from an arrow direction.
FIG. 6 is an enlarged view of a part D in FIG. 2.
FIG. 7 is a graph illustrating vibration reduction characteristics of a tube for a transportation system according to differences in elastic modulus of a damping member in the tube for the transportation system according to an embodiment of the present disclosure.

### [Mode for Invention]

Like reference numerals or symbols denoted in the specification are members or components that perform the substantially same functions. Also, this specification does not describe all the elements according to embodiments of the disclosure, and descriptions well-known in the art to which the disclosure pertains or overlapped portions are omitted. Terms such as "~portion", "~member", "~module", and the like may be implemented in hardware or software or any combination thereof. According to various embodiments, a plurality of "~portions", "~members", or "~modules" may be embodied as a single element, or a single "~portion", "~member", or "~module" may include a plurality of elements.

It will be understood that when an element is referred to as being "connected" to another element, it may be directly or indirectly connected to the other element, where indirect connection includes "connection via a wireless communication network.

It will be understood that the term "include" when used in this specification, specifies the presence of stated elements, but do not preclude the presence or addition of one or more other elements.

It will be understood that when an element is referred to as being "on" another element, it may be directly on the other element or intervening elements may also be present.

Terms such as "1st", "2nd", "primary", or "secondary" may be used simply to distinguish an element from other elements, without limiting the element in other aspects.

A singular form of a noun corresponding to an item may include one item or a plurality of the items unless context clearly indicates otherwise.

The reference numerals used for method steps are for convenience of description, but not to limit an order of the steps. Thus, unless the context clearly dictates otherwise, the written order may be practiced otherwise.

Hereinafter, the principles of operation and embodiments of the disclosure will be described with reference to the accompanying drawings.

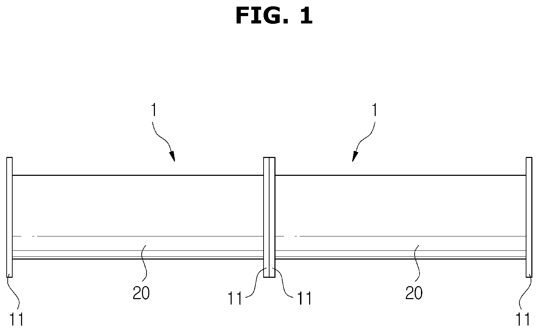

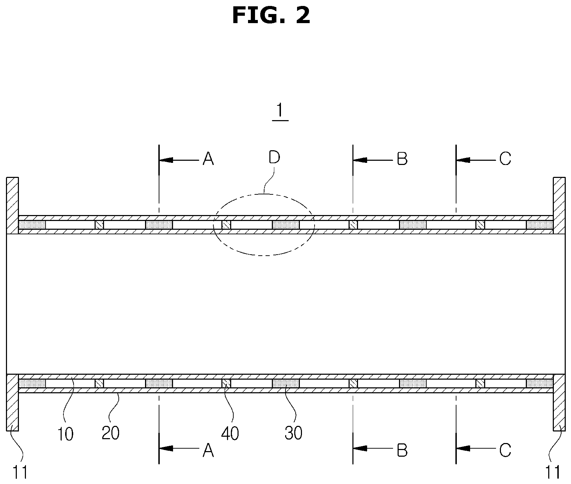

FIG. 1 is a side view illustrating a structure of a tube for a transportation system according to an embodiment of the present disclosure. FIG. 2 is a cross-sectional view of a tube for a transportation system according to an embodiment of the present disclosure. FIG. 1 illustrates a state in which two tubes for a transportation system are connected to each other.

As shown in FIG. 1 and FIG. 2, a tube for a transportation system (hereinafter, "tube") 1 includes an inner tube 10 and an outer tube 20 that surrounds the inner tube 10, thereby having a double structure.

The inner tube 10 may provide a travel path for a vehicle of the transportation system. A guide rail is installed inside the inner tube 10, and the vehicle may travel along the tube 1 at an ultra-high speed in a magnetically levitated state from the guide rail due to a magnetic force formed between the guide rail and the vehicle.

Here, the ultra-high speed may refer to a speed of 300 km/h or more or 700 km/h or more, but is not limited thereto.

The inside of the inner tube 10 may be maintained at a low pressure to reduce air resistance during travel of the vehicle.

An internal pressure of the inner tube 10 may be a pressure close to a vacuum. When an external pressure of the tube 1 is an atmospheric pressure of 1 atm (approximately 101 kPa, 1 bar), the internal pressure of the inner tube 10 may be approximately less than 10 kPa (0.1 bar). The internal pressure of the inner tube 10 is not limited thereto. The internal pressure of the inner tube 10 may be 1 kPa (0.01 bar or 10 mbar), 500 Pa (5 mbar), 200 Pa (2 mbar), or 100 Pa (1 mbar), and may also include a pressure lower than the above values.

Hereinafter, although the internal pressure of the inner tube 10 is described based on approximately 100 Pa (1 mbar), which is 0.001 atm, the inside of the inner tube 10 may be provided within various pressure ranges including the above pressure values within a relatively lower range than the atmospheric pressure.

The outer tube 20 is installed on the outside of the inner tube 10 so as to surround the inner tube 10, and the tube 1 may include a damping member 30 that supports the inner tube 10 and the outer tube 20 to perform a buffering function between the inner tube 10 and the outer tube 20.

In the transportation system, a magnetic levitation method is applied to reduce frictional resistance, which is one of the driving resistances, and attractive and repulsive forces of a magnetic field are periodically and precisely controlled within the inner tube 10 to maintain a constant gap between the guide rail and the vehicle, thereby allowing the vehicle to maintain a magnetically levitated state. In this instance, controlling circumferential vibration may stabilize the state of the transportation system.

The damping member 30 may elastically support the inner tube 10 and the outer tube 20 between the inner tube 10 and the outer tube 20, thereby buffering and reducing the vibration that occurs and acts in the circumferential direction of the transportation system during travel of the vehicle.

The tube 1 according to an embodiment may also be applied to a magnetic levitation system using an electrodynamic repulsive force, and the vibration reduction of the tube 1 including the damping member 30 may stabilize the transportation system of the magnetic levitation system in which the vehicle is magnetically levitated using an electrodynamic repulsive force.

A plurality of tubes 1, each having a predetermined length, may be continuously connected to provide the travel path of the vehicle.

The inner tube 10 may have flanges 11 at each end in a longitudinal direction, and the tubes 1 may be connected and fastened to each other by mutual support through the flanges 11. The outer tube 20 may be arranged outside the inner tube 10 to surround the inner tube 10 between the flanges 11.

The damping member 30 may have an elastic modulus smaller than that of the inner tube 10 and the outer tube 20, and may elastically support the inner tube 10 and the outer tube 20 between the inner tube 10 and the outer tube 20.

The inner tube 10 and the outer tube 20 may be made of steel. In order to maintain the travel path of the vehicle at approximately 0.001 atm, an increase in the amount of material within the travel path requires to be strongly suppressed. To this end, the tube 1 requires to be made of a material with a low outgassing rate. Steel has excellent yield strength and tensile strength, and has a low outgassing rate compared to concrete or polymer composite materials. Accordingly, the tube 1 made of steel may be advantageously applied to ensure rigidity and maintain a sub-vacuum state in the travel path of the vehicle formed inside the tube.

The damping member 30 may have a lower elastic modulus than the steel forming the tube 1, and may stably elastically support the inner tube 10 and the outer tube 20 between the inner tube 10 and the outer tube 20 made of steel.

The elastic modulus of the damping member 30 may be 1/100 to 1/1000 of the elastic modulus of the steel forming the inner tube 10 and the outer tube 20.

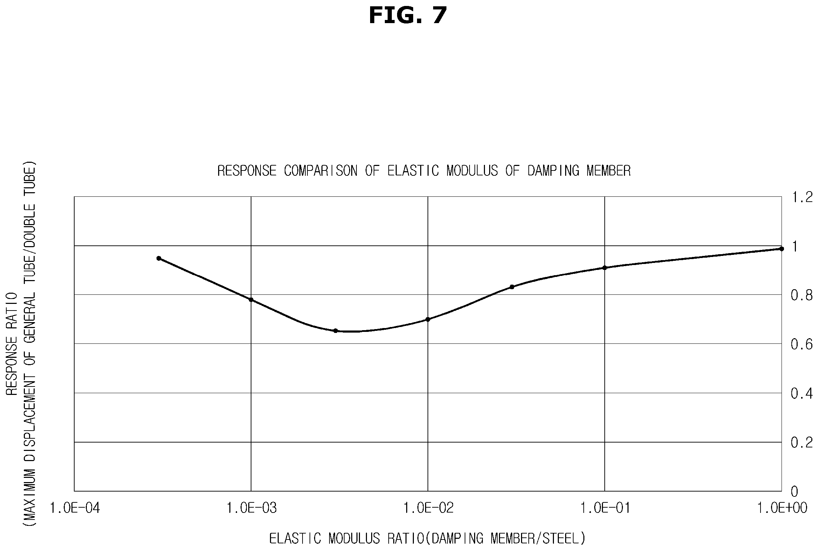

FIG. 7 is a graph illustrating vibration reduction characteristics of the tube 1 according to differences in elastic modulus of the damping member 30.

**In** the graph of FIG. 7, the horizontal axis is an elastic modulus ratio. The elastic modulus ratio represents a value obtained by dividing an elastic modulus of the damping member 30 by that of the steel forming the inner tube 10 and the outer tube 20. **In** addition, the vertical axis in the graph is a response ratio. The response ratio represents a value obtained by dividing a maximum displacement of a general tube during vibration by a maximum displacement of a double tube during vibration. Here, the double tube refers to the tube 1 for a transportation system according to an embodiment.

As shown in FIG. 7, it may be confirmed that the response ratio in the tube 1 is significantly reduced when the elastic modulus of the damping member 30 is 1/100 to 1/1000 of the elastic modulus of the steel forming the inner tube 10 and the outer tube 20. This indicates that a damping ratio provided by the damping member 30 is significantly increased in the range of 1/100 to 1/1000 of the elastic modulus of the steel forming the inner tube 10 and the outer tube 20.

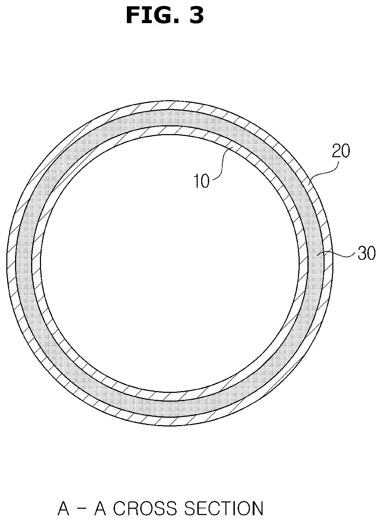

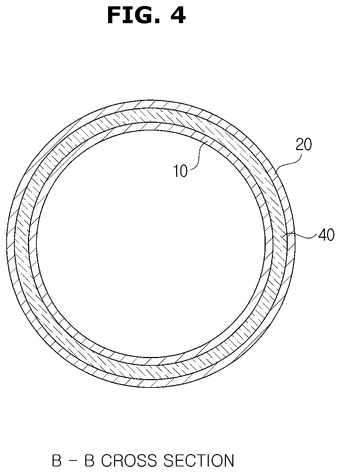

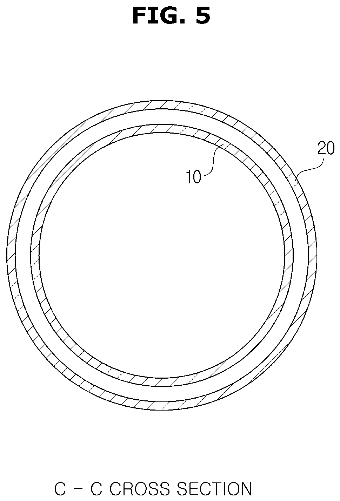

As shown in FIG. 2 to FIG. 5, the damping member 30 may have an annular shape in which an inner circumference of the damping member 30 is supported by an outer circumference of the inner tube 10 and an outer circumference of the damping member 30 is supported by an inner circumference of the outer tube 20.

The damping member 30 in an annular shape may continuously support the outer circumference of the inner tube 10 and the inner circumference of the outer tube 20 along the circumferential direction, thereby evenly elastically supporting the inner tube 10 and the outer tube 20.

When assembling the outer tube 20 to the outside of the inner tube 10, the annular damping member 30 may be simply installed between the inner tube 10 and the outer tube 20 by being fitted around the circumference of the inner tube 10.

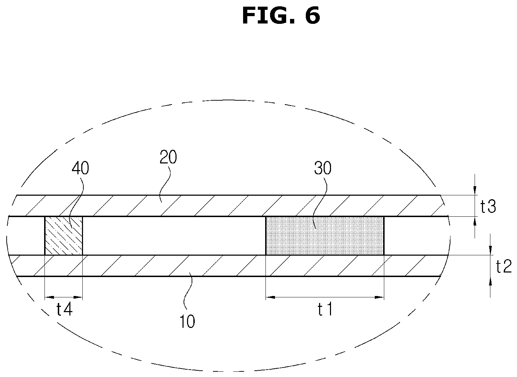

As shown in FIG. 6, in a case where a width t1 of the damping member 30 in a longitudinal direction of the tube 1 is smaller than a thickness t2 of the inner tube 10 or a thickness of the outer tube 20, a surface area of the damping member 30 pressed by an outer surface of the inner tube 10 or an inner surface of the outer tube 20 may be excessively reduced, and an elastic force of the damping member 30 that elastically supports the inner tube 10 and the outer tube 20 may not be properly exerted.

Accordingly, the width t1 of the damping member 30 in a longitudinal direction of the tube 1 may be provided to be greater than half of the sum of the thickness t2 of the inner tube 10 and the thickness t3 of the outer tube 20, so that the damping member 30 may elastically support the inner tube 10 and the outer tube 20 between the inner tube 10 and the outer tube 20.

**In** addition, in a case where the width of the damping member 30 in the longitudinal direction of the tube 1 is excessively large, the amount of the damping member 30 used increases, which significantly increases the production cost of the tube 1.

Accordingly, considering the economic value of the tube 1 and the vibration reduction performance of the damping member 30 that reduces vibration between the inner tube 10 and the outer tube 20, it may be preferable for the width t1 of the damping member 30 in the longitudinal direction of the tube 1 to be 2 to 5 times greater than half of the sum of the thickness t2 of the inner tube 10 and the thickness t3 of the outer tube 20.

The thickness t2 of the inner tube 10 and the thickness t3 of the outer tube 20 may be the same, and half of the sum of the thickness t2 of the inner tube 10 and the thickness t3 of the outer tube 20 may be the thickness of the inner tube 10 or the outer tube 20.

A plurality of the damping members 30 may be spaced apart from each other along the longitudinal direction of the tube 1 to provide a smooth vibration reduction along the entire length of the tube 1.

The plurality of damping members 30 may be arranged at regular intervals along the longitudinal direction of the tube 1 so that vibration may be evenly reduced throughout the entire length of the tube 1.

Considering that a diameter of the tube 1 used in recent transportation systems is approximately 3 to 4 m, an interval between the damping members 30 may preferably be in the range of 1 to 5 m.

In a case where large vibrations occur in a local portion of the tube 1 due to an installation environment, etc., of the transportation system, the damping member 30 may be disposed in a concentrated manner in the portion where vibrations are severe.

Referring again to FIG. 2 to FIG. 6, the tube 1 may further include a spacer 40 disposed between the damping members 30 to support the inner tube 10 and the outer tube 20 between the inner tube 10 and the outer tube 20.

The spacer 40 may secure a space between the inner tube 10 and the outer tube 20 that are elastically supported by the damping member 30.

The spacer 40 may have an annular shape in which an inner circumference of the spacer 40 is supported by the outer circumference of the inner tube 10 and an outer circumference of the spacer 40 is supported by the inner circumference of the outer tube 20, and may be disposed between the damping members 30.

When assembling the outer tube 20 to the outside of the inner tube 10, the annular spacer 40 like the damping member 30 may be simply installed between the inner tube 10 and the outer tube 20 together with the damping member 30 by being fitted around the circumference of the inner tube 10 so as to be positioned between the damping members 30.

The spacer 40 is made of steel like the inner tube 10 and the outer tube 20, and may have a relatively thinner thickness than the damping member 30 so that an elastic action of the damping member 30 is allowed.

In a case where a width t4 of the spacer 40 in the longitudinal direction of the tube 1 is smaller than the thickness of the inner tube 10 or the outer tube 20, a surface area of the spacer 40 supporting the outer surface of the inner tube 10 or the inner surface of the outer tube 20 may be excessively reduced, and a supporting force of the spacer 40 that supports the inner tube 10 and the outer tube 20 may be significantly reduced.

In addition, considering the production cost of the tube 1, it may be preferable to use a relatively smaller amount of the spacer 40, that does not perform a damping action, than the damping member 30 that performs a damping action.

Accordingly, considering the production cost of the tube 1 and the support performance of the spacer 40 supporting the inner tube 10 and the outer tube 20, it may be preferable that the width t4 of the spacer 40 in the longitudinal direction of the tube 10 be 2 to 3 times greater than half of the sum of the thickness t2 of the inner tube 10 and the thickness t3 of the outer tube 20.

The spacer 40 may be provided in plurality, and the plurality of spacers 40 may be disposed between the damping members 30 so as to form equal intervals between each other.

## Claims

1. A tube for a transportation system, the tube comprising:
an inner tube for providing a travel path of a vehicle that travels under a pressure lower than atmospheric pressure;
an outer tube formed outside the inner tube; and
a damping member for supporting the inner tube and the outer tube and buffering between the inner tube and the outer tube.

2. The tube for the transportation system of claim 1, wherein the damping member has a smaller elastic modulus than the inner tube and the outer tube.

3. The tube for the transportation system of claim 1, wherein the inner tube and the outer tube are made of steel, and
the damping member has a smaller elastic modulus than the steel.

4. The tube for the transportation system of claim 3, wherein the elastic modulus of the damping member is 1/100 to 1/1000 of an elastic modulus of the steel.

5. The tube for the transportation system of claim 1, wherein the damping member has an annular shape in which an inner circumference of the damping member is supported by an outer circumference of the inner tube and an outer circumference of the damping member is supported by an inner circumference of the outer tube.

6. The tube for the transportation system of claim 5, wherein a width of the damping member in a longitudinal direction of the tube is greater than half of a sum of a thickness of the inner tube and a thickness of the outer tube.

7. The tube for the transportation system of claim 6, wherein the width of the damping member in the longitudinal direction of the tube is 2 to 5 times greater than half of the sum of the thickness of the inner tube and the thickness of the outer tube.

8. The tube for the transportation system of claim 5, wherein a plurality of damping members are provided so as to be spaced apart from each other in a longitudinal direction of the tube.

9. The tube for the transportation system of claim 8, further comprising:
a spacer disposed between the plurality of damping members to support the inner tube and the outer tube.

10. The tube for the transportation system of claim 9, wherein the spacer has an annular shape in which an inner circumference of the spacer is supported by an outer circumference of the inner tube and an outer circumference of the spacer is supported by an inner circumference of the outer tube.
